# EUROPÄISCHE PATENTANMELDUNG

(11) **EP 3 474 402 A1**
(43) Veröffentlichungstag der Anmeldung: **24.04.2019**
(21) Anmeldenummer: 17197224.3
(22) Anmeldetag: 19.10.2017
(51) Int. Cl.: H02G 3/22, E04B 1/68, F16L 5/02

(54) **MEHRWEG-ABDICHTUNG**

(71) Anmelder: Wolf, Roland, 70437 Stuttgart (DE)
(72) Erfinder: Wolf, Roland, 70437 Stuttgart (DE)
(74) Vertreter: Jeck, Anton

(57) **Zusammenfassung**

Die Anmeldung umfasst eine temporäre Mehrweg-Kabel- oder Fugen-Abdichtung für Montagen bei fließendem oder stehendem Wasser gegen Wasser-fortleitung und Rauchdurchdringung in Zwischenräumen und in Hohlräumen bei Kabelschutzrohren, Kanälen und Wanddurchführungen, die mit Kabeln und/oder Rohren belegt sind oder die in Fugenkammern von Dehn- und/oder Bewegungsfugen eingeschoben und bei Auflagerbänken eingezogen werden kann. Die Vorrichtung besteht aus einem in der Länge und Breite festgelegten Flachschlauchabdichtkissen mit einer Leckagerate von ≤ 2,7 mbarl/Jahr, das über ein eingeschweißtes Reifenventil oder einen eingeschweißten Thermoplast-Einfüllschlauch mit Luft befüllt werden kann, mit druckdichten Verschlüssen und an den Außenseiten mit einem Zellkautschuk-Dichtband mit/ohne Quellvlies-, Textil-, Kunststoff- oder Glasfaser-gewebe, hoher Druckverform-Beständigkeit und Rückprallelastizität ausgerüstet ist und nach Druckfüllung über das Reifenventil oder den Thermoplast-Einfüllschlauch durch eine Kombination aus Verpressen einer Crimphülse mit einer Crimpzange eine Dichtigkeit bis über 5 m Wassersäule aufweist.

## Beschreibung

Die Erfindung betrifft eine Vorrichtung zur temporären Mehrweg-Kabel- oder Fugen-Abdichtung für Montagen bei fließendem oder stehendem Wasser gegen Wassereintritt und Rauchdurchdringung in Zwischenräumen und in Hohlräumen, Kabelschutzrohren und Wanddurchführungen, die mit Kabeln und/oder Rohren belegt oder in Dehn- und/oder Bewegungsfugen von Bauwerken gegen Eiszapfen- und Glatteisbildung anwendbar sind.

In der EP 1686 670 B1 ist eine wiederverwendbare Vorrichtung zum Abdichten von Zwischenräumen, Anheben oder Sichern von Werkstücken beschrieben.

In der EP 1867 904 B1 ist eine wiederverwendbare Vorrichtung zum gas- und druckwasserdichten Verschließen von Hohlräumen, zwischen Mauerdurchbrüchen sowie zwischen Kabelkanälen und zur Abdichtung von Zwischenräumen bei Stellwänden beschrieben.

In der PCT/EP 2016/052784 ist eine wiederverwendbare Schutzvorrichtung gegen Wasser- und Rauchfortleitung in Kanälen und Gewerken beschrieben.

Die PCT/EP 2017/065542, EP 1 867 904 B1 lehrt ein wiederverwendbares Flachschlauchkissen zum Abdichten von Hohlräumen mit einem Ventil. Die Verwendung eines abdichtenden Quellvlies-Dichtbands, von Crimphülsen zum druckdichten Verschließen sowie eines thermoplastischen Einfüllschlauchs gehen aus ihr nicht hervor.

Die PCT/EP 2016/052784, EP 16 712 216.7, CN 2016 8000 9874.0, IN 2017 1703 1526, US 15 549 670 offenbart eine wiederverwendbare Vorrichtung zum Schutz vor Wassereintritt in Zwischenräumen und in Hohlräumen von Dehn- und Bewegungsfugen und Gebäuden, welche als Flachschlauchkissen mit einem Reifenventil vorgesehen ist, mit welchem die Vorrichtung mit Luft oder gasförmigem Medium befüllbar ist.

Die WO 2016/128 435 offenbart ein Flachschlauchkissen mit Dichtmittel, welches über ein Druckluftventil je nach Anforderung befüllt oder evakuiert werden kann. Die Verwendung von Crimphülsen zum druckdichten Verschließen sowie eines druckdicht verschweißbaren thermoplastischen Einfüllschlauchs gehen aus ihr nicht hervor.

Die DE 103 41 005 A1 lehrt eine Abdicht-, Hebe- und/oder Sicherungsvorrichtung, welche als Flachschlauchkissen ausgebildet ist und mit druckfesten Verschlüssen an den Enden versehen ist. Seitlich ist an dem Flachschlauchkissen ein Ventil vorgesehen, mittels welchem die Vorrichtung mit einem Gas oder einer Flüssigkeit befüllbar ist. Bei dem Ventil handelt es sich um einen wiederverwendbaren Einlass für Füllmaterial. Die Verwendung eines Quellvlies-Dichtbands geht aus ihr nicht hervor.

Aufgabe der vorliegenden Erfindung ist es, aus Verbundfolie, mit oder ohne metallische Einlage, eine besonders dichte Mehrweg-Abdichtung bei fließendem oder stehendem Wasser gegen Wasserfortleitung/Eiszapfen- und Glatteisbildung zu schaffen.

Diese Aufgabe wird mit den Merkmalen des Anspruchs 1 gelöst.
Vorteile dieser Ausgestaltung sind ihre einfache Montage bei fließendem oder stehendem Wasser, sowie ihre einfache Demontage, erneute Montage und unkritische Entsorgung.

Eine erste vorteilhafte Ausgestaltung der Erfindung ist dadurch gekennzeichnet, dass eine ein- oder mehrlagige Anordnung des Flachschlauchabdichtkissens in dem Zwischenraum und/oder in dem Hohlraum vorgesehen ist, wobei der Thermoplast-Einfüllschlauch oder ein Reifenventil für eine Summenleckrate von ≤ 2,7 mbarl/Jahr im Heißsiegelschweißverfahren mit dem Flachschlauchabdichtkissen verbunden ist, wobei die Dichtigkeit des Thermoplast-Einfüllschlauchs durch Verklemmen mittels Crimphülse, vorzugsweise in Kombination mit Crimpzange, bis 3 bar überdruckdicht erzielbar ist. Besonders bevorzugt liegt die Weiterentwicklung darin, dass das Flachschlauchabdichtkissen über den Thermoplast-Einfüllschlauch oder über ein Reifenventil mit einem gasförmigen Medium gefüllt ist und der bis 3 bar überdruckdichte Einfüllschlauch durch Verpressen mittels Crimphülse in Kombination mit einer Crimpzange hergestellt ist. Diese Lösung, ist weitgehend temperaturunabhängig und überdruckdicht. Eine Dichtigkeit des Flachschlauchabdichtkissens kann demnach durch Aufeinanderpressen beziehungsweise Zusammenpressen der Innenwandung des thermoplastischen Einfüllschlauchs mittels einer den Schlauch umgebende, vorzugsweise quetschdeformierten, Crimphülse bereitgestellt sein. Besonders bevorzugt ist es, dass eine kreisförmige oder längsförmige Anordnung des Flachschlauchabdichtkissens vorgesehen ist, wobei der Thermoplast-Einfüllschlauch für eine Summenleckrate von ≤ 2,7 mbarl/Jahr im Heißsiegelschweißverfahren mit dem Flachschlauchabdichtkissen verbunden ist, wobei die Dichtigkeit des Thermoplast-Einfüllschlauchs durch Verklemmen mittels Crimphülse in Kombination mit einer Crimpzange bis 3 bar überdruckdicht erzielbar ist.

Eine weitere vorteilhafte Ausgestaltung der Erfindung besteht darin, dass sie außenliegend in Längsrichtung zusätzlich ein elastisches, unter Betriebsbedingungen bei Montagen bei fließendem oder stehendem Wasser mit der Umgebung nicht dauerhaft selbstklebendes Zellkautschuk-Dichtband, vorzugsweise mit Quellvlies, mit einem Flächengewicht von 400 g/m² bis 1.300 g/m² aufweist.
Das modifizierte Zellkautschuk-Dichtband, welches mit Quellvlies modifiziert sein kann, weist sehr geringe Schrumpfungseigenschaften auf, ist nicht dauerhaft selbstklebend und/oder ist für Montagen bei fließendem oder stehendem Wasser mit einem Flächengewicht von vorzugsweise 400 g/m² bis 1.300 g/m² ausgebildet. Besonders bevorzugt liegt die Weiterentwicklung darin, dass die Zellkautschuk-Abdichtsterne zum Einschieben zwischen Kabeln und/oder Rohren insbesondere aus zwei übereinander gelegten Zellkautschuk-Abdichtbändern, vorzugsweise mittig mit einer etwa 10 mm breiten Quellvlies-Dichtbandstreifen-Umwicklung und einer Längsnaht, hergestellt sind. Diese Lösung bietet Dichtheit gegen Wasserfortleitung bis 5 m Wassersäule bei einer Abdichtungsmontage bei fließendem oder stehendem Wasser und unmittelbar nach Montage und die leichten Demontage und Wiederverwendbarkeit, ohne die Gefahr einer Beschädigung von Kabeln oder Rohren. Besonders bevorzugt ist es, dass das Flachschlauchabdichtkissen im Anwendungsbereich als Einzelelement voll- oder halbkreisförmig im Hohlraum-, Kabelschutzrohr- oder Wanddurchführungs-umfang oder in Dehn- und/oder Bewegungsfugen und Auflagerbänken angeordnet ist, wobei sich das Reifenventil oder der Thermoplast-Einfüllschlauch mit zwei Crimphülsen mindestens an einem Ende des Flachschlauchabdichtkissens befindet.

Eine bevorzugte Weiterbildung der Erfindung besteht darin, dass beim Abdichten von mit Kabeln und/oder Rohren durchzogenen Hohlräumen, Kabelschutzrohren oder Wanddurchführungen im Bereich der Berührungsstellen von Kabeln und/oder Rohren eine Umwicklung aus einem Zellkautschuk-Dichtband mit bzw. ohne Klebefolie eingesetzt ist und sich im Innenraum Füllelemente oder Zellkautschuk-Abdichtsterne befinden, die aus Dichtbandmaterial hergestellt sind. Das Flachschlauchabdichtkissen kann im Anwendungsbereich als Einzelelement in Auflagerbänken deckungsgleich übereinander oder in Dehn- und Bewegungsfugen abschnittsweise über-/aneinander gelagert bis Abdichtlängen von über 100 m angeordnet sein, wobei sich das Reifenventil oder der Thermoplast-Einfüllschlauch mindestens an einem Ende des Flachschlauchabdichtkissens befindet.

Eine zweckmäßige Weiterentwicklung der vorliegenden Erfindung besteht darin, dass die Zellkautschuk-Abdichtsterne, zum Einschieben zwischen Kabeln und/oder Rohren, aus zwei übereinander gelegten Zellkautschuk-Abdichtbändern, umgelegten Quellvlies-Abdichtbändern mit einer ≥ 5 mm breiten Längsnaht, hergestellt sind.
Beim Abdichten von Dehn- und Bewegungsfugen oder Auflagerbänken durchzogenen Hohlräumen im Bereich der Berührungsstellen kann eine zumindest 100 % Umwicklungsbedeckung der selbigen in Kombination mit aus einem modifizierten Quellvlies-Zellkautschuk-Dichtband mit einer Dicke ≥ 6 mm mit Klebefolie hergestellt sein.

Eine besonders bevorzugte Weiterbildung der Erfindung besteht darin, dass das Flachschlauchabdichtkissen über ein Reifenventil oder über den Thermoplast-Einfüllschlauch mit einem gasförmigen Medium (Luft) gefüllt ist und der bis 3 bar überdruckdichte Einfüllschlauch durch Verpressen mittels Crimphülse in Kombination mit einer Crimpzange hergestellt ist.
Das Flachschlauchabdichtkissen kann weiterhin mit einem gefalteten Band oder Flachschlauch gebildet sein, das je nach dem Anwendungsbereich Thermoplast, Elastomere und/oder schwer entflammbare Thermoplast-Elastomer-Gemische aufweist, wobei diese Stoffe metallische und/oder metallfreie Einlagen aufweisen.

Eine weitere vorteilhafte Ausgestaltung der Erfindung besteht darin, dass das Flachschlauchabdichtkissen, insbesondere das Band, mit metallischer Einlage vorzugsweise mindestens aus einer fünflagigen Thermoplast-Verbundfolie mit den Lagen
- 100 bis 250 µm PE
- 10 bis 23 µm PET
- 9 bis 5 µm ALU
- 10 bis 23 µm PET
- 100 bis 250 µm PE
hergestellt ist.
Diese Lösung weist eine vergleichsweise lange Brauchbarkeitsdauer bei einem Thermoplast-Einfüllschlauch von ca. 5 bis 7 Jahren und beim Reifenventil von mehr als 20 Jahren und eine hohe Beständigkeit gegen Chemiekaliengemische und Umwelteinflüsse auf. Vorzugsweise kann das Flachschlauchabdichtkissen mit metallischer Einlage eine Summenleckrate von 2,7 mbarl/Jahr und das dreilagig aufgebaute, metallfreie Abdichtkissen eine solche von ≤ 200 mbarl/Jahr aufweisen.

Eine weitere vorteilhafte Ausgestaltung der Erfindung besteht darin, dass das Flachschlauchabdichtkissen aus einer dreilagigen Thermoplast-Verbundfolie ohne metallische Einlage mit dem Aufbau
- 100 bis 250 µm PE
- 9 bis 23 µm PET oder gleichwertige PBT, PPE, PP, PE, insbesondere Tyvek < 64,4 g/m² etc.
- 100 bis 250 µm PE
hergestellt ist.

Eine weitere vorteilhafte Ausgestaltung der Erfindung besteht darin, dass für das Zellkautschuk-Dichtband und den Zellkautschuk-Abdichtstern aus Werkstoffen sogenannter Natur- und/oder Synthesekautschuk Elastomeren mit einer dem Anwendungsbereich vorgesehenen Schichtdicke von 2 bis > 10 mm mit/ohne einem zugfesten Quellvlies-, Textil-, Kunststoff- oder Glasfasergewebe im Zentrum oder an den Rändern, einseitig ohne/mit doppelseitig klebendem Dichtband versehen, hergestellt werden.
Das Zellkautschuk-Dichtband weist sehr gute Freibewitterungs-, Ozon-, Druckverformbeständigkeit und Rückprallelastizität mit einem äußerst geringen Gewicht mit/ohne dauerhaft selbstklebenden Eigenschaften mit einem Flächengewicht von etwa 400 g/m² bei einer Banddicke von 3 mm für Kabel-/Rohrabdichtung auf.

Eine weitere vorteilhafte Ausgestaltung der Erfindung besteht darin, dass das Zellkautschuk-Dichtband, vorzugsweise in Kombination mit Quellvlies, also entsprechend modifiziert, für die Anwendungen als wiederverwendbare Schutzvorrichtung gegen Wasserfortleitung in Brücken, Tunneln und Gebäudeeinführungen modifiziert mit Glasfaser-, Textil- oder PP-Gewebeband mit zusätzlich zugfesten und temperaturstabilen Eigenschaften in Banddicken ≥ 6 mm und 10 mm, sowie dass das zugfeste Gewebe in einer neutralen Lage in der Mitte ausgestaltet, hergestellt sein kann.
Diese Lösung weist eine vergleichsweise sehr hohe Wirtschaftlichkeit und Umweltfreundlichkeit auf, so dass feuchtigkeitsdichte Abdichtkissen-Lager-Einzelverpackungen aus PE-Folie entfallen und dass Montagen sofort bei fließendem oder stehendem Wasser ausgeführt werden können.
Diese Lösung reduziert die Material-Beschaffungskosten, den Aufwand und die Gefahr von Beschädigungen in Anwendungen, bei denen die Abdichtung auf Grund von öffentlichen Ausschreibungen bei Nachbelegungen oft durch unterschiedliche Unternehmen gewechselt werden muss.

Besonders bevorzugt ist es vorgesehen, dass das Flachschlauchabdichtkissen mit metallischer Einlage eine Summenleckrate von ≤ 2,7 mbarl/Jahr und das dreilagig aufgebaute, metallfreie Abdichtkissen eine solche von ≤ 200 mbarl/Jahr aufweist. Vorzugsweise besteht die Vorrichtung aus einem in der Länge und Breite festgelegten Flachschlauchabdichtkissen (1), welches als Zwischenraumabdichtung an seinen Außenseiten mit einem Quellvlies-modifiziertem Zellkautschuk-Dichtband (5 oder 6a) ausgerüstet ist, das an einer Breitseite mit einem Reifenventil (3) oder Thermoplast-Einfüllschlauch (2a) verschweißt ist, das mit einem gasförmigem Medium befüllt (4) und überdruckdicht mit einer Crimphülse (2b) in Kombination mit einer Crimpzange mit einer Leckrate von ≤ 2,7 mbarl/Jahr verschlossen ist

Die Erfindung wird nun anhand von Ausführungsbeispielen näher erläutert. Es zeigen:
- Fig. 1: eine perspektivische Ansicht einer temporären unbeschichteten Mehrweg-Abdichtung für Kabel-/Schutzrohre oder für Dehn- und Bewegungsfugen oder Auflagerbänke gegen Wasserfortleitung,
- Fig. 2a: eine perspektivische Ansicht einer der in Fig. 1 gezeigten Abdichtung mit einer 3 mm dicken und zwischen 20 bis 60 mm breiten Quellvlies-, Zellkautschuk-Beschichtung,
- Fig. 2b: eine perspektivische Ansicht einer bis 60 cm breiten temporären Mehrweg-Abdichtung mit einer vollflächig modifizierten Quellvlies-Zellkautschuk-Abdichtung der Fig. 1 für Fugenbreiten von mehr als 16 cm in Dehn- und Bewegungsfugen oder Auflagerbänken,
- Fig. 2c: eine perspektivische Ansicht der Fig. 1 und 2b für Auflagerbänke mit zwei Abdichtkissen, vollflächig umhüllt mit modifiziertem Quellvlies-Zellkautschuk in einer Schichtdicke ≥ 6 mm, mit mindestens einem ausgestanzten Zellkautschukloch zum Einziehen des Abdichtkissens in Auflagerbänke ausgestattet,
- Fig. 2d: eine perspektivische Ansicht der Fig. 1 und 2b mit modifiziertem ≥ 6 mm Quellvlies-Zellkautschuk-Dichtband für Längs- und Querfugen in Brücken und Tunneln, an den Enden mindestens 30 cm deckungsgleich aneinandergereiht für Abdichtlängen bis über 100 m,
- Fig. 2e: eine perspektivische Ansicht der Fig. 1 und 2b, mindestens ein Ende um 180° umgebogen, mit modifizierter Quellvlies-Zellkautschuk-Beschichtung für Eckbereiche in Brücken, Tunneln und Gebäuden,
- Fig. 3: eine Querschnittsansicht des in Fig. 1 gezeigten Thermoplast-Einfüllschlauchs, der mittels Crimphülse in Kombination mit Crimpzange bis 3 bar überdruckdicht verschlossen ist,
- Fig. 4: einen Querschnitt einer der Fig. 2a ähnlichen Mehrweg-Abdichtung,
- Fig. 5: eine perspektivische Ansicht der in Fig. 4 gezeigten Kabelschutzrohr- und/oder Rohr-Zwischenraumabdichtung aus einem mit Quellvlies-Dichtband umhüllten Zellkautschuk-Dichtstern,
- Fig. 6a: eine Querschnittsansicht der in den Fig. 2a, 4 und 5 gezeigten Zellkautschuk-Abdichtu ng,
- Fig. 6b: eine Querschnittsansicht des in Fig. 6a modifizierten zugfeste Zellkautschuk-Dichtbandes mit eingebettetem Quellvlies-, Glasfaser- oder Textilgewebe.

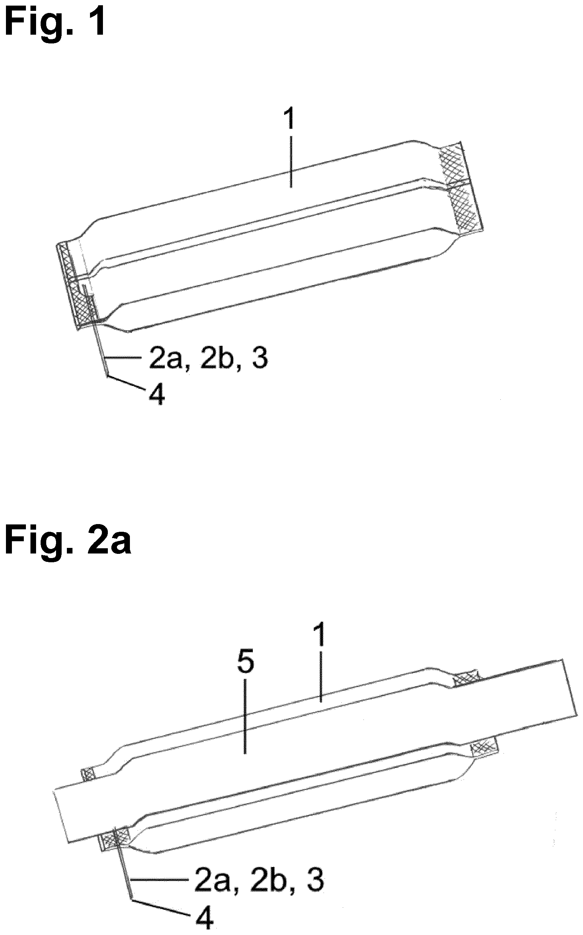

Die Fig. 1 zeigt die temporäre Mehrweg-Abdichtung mit dem Flachschlauchabdichtkissen 1, z. B. in Breiten von 0,1 m bis 0,6 m und Längen von 0,15 m bis 27 m, vorzugsweise gefüllt mit Luft, mit oder ohne Metalleinlage, aus einer, insbesondere im Bahngasschweißen und Heißsiegelschweißverfahren hergestellten, druckbeständigen, mindestens dreilagigen Thermoplast-Verbundfolie oder fünflagigen Aluminium-Verbundfolie, welche mit einem eingeschweißten Thermoplast-Einfüllschlauch 2a oder Reifenventil 3 zum Befüllen des Abdichtkissens verbunden ist, der sich an der Längsseite und an einer der Breitseiten des Flachschlauchkissens befindet.

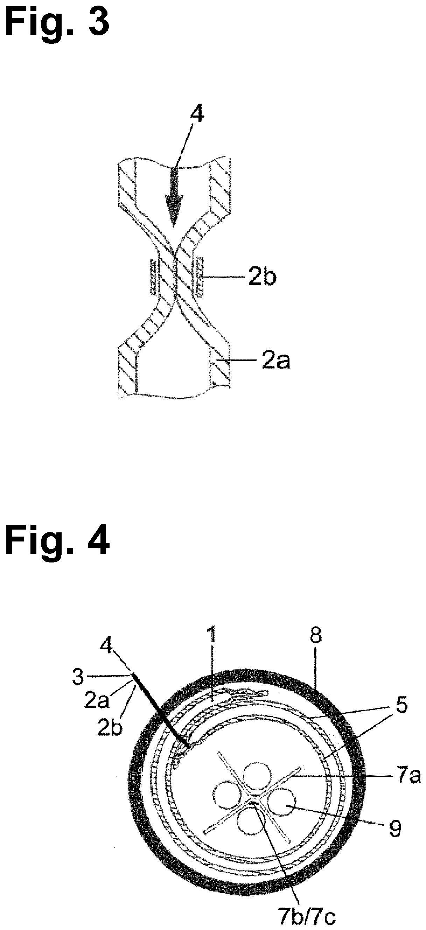

Die Fig. 2a zeigt eine perspektivische Ansicht der Fig. 1 mit einem beidseitig außen mittig teilflächig mit Quellvlies modifiziertem Zellkautschuk-Dichtband 5 in den Abmessungen Dicke 3 mm, Breite mindestens 20 mm und Länge mindestens 100 mm länger als das Abdichtkissen der Fig. 1 beschichteten Flachschlauchabdichtkissen 1, das mit einem vorzugsweise im Heißsiegelschweißverfahren verschweißten Thermoplast-Einfüllschlauch 2a oder mit einem Reifenventil 3 versehen ist, der/das sich an einer der 15 cm bis 100 cm langen Längsseiten oder an den 10 bis 60 cm großen Stirn- bzw. Breitseiten des Flachschlauchabdichtkissens 1 befindet und bei kreisförmiger Anwendung zur optimalen Druckverteilung dienen kann. Die Ausbildung als Flachschlauchabdichtkissen 1 wird vorzugsweise durch Herstellung von druckdichten Verschlüssen in Längsrichtung und an den beiden Enden der Verbundfolien-Oberflächen erzielt. Nach Druckfüllung mit Luft 4 über ein Reifenventil 3 oder den Thermoplast-Einfüllschlauch 2a kann die Druckdichtigkeit des Thermoplast-Einfüllschlauches 2a, wie in der Fig. 3 gezeigt, durch Verpressen des Thermoplast-Einfüllschlauches 2a mit einer in Fig. 3 angedeuteten Crimphülse 2b mittels einer Crimpzange erzielt werden.

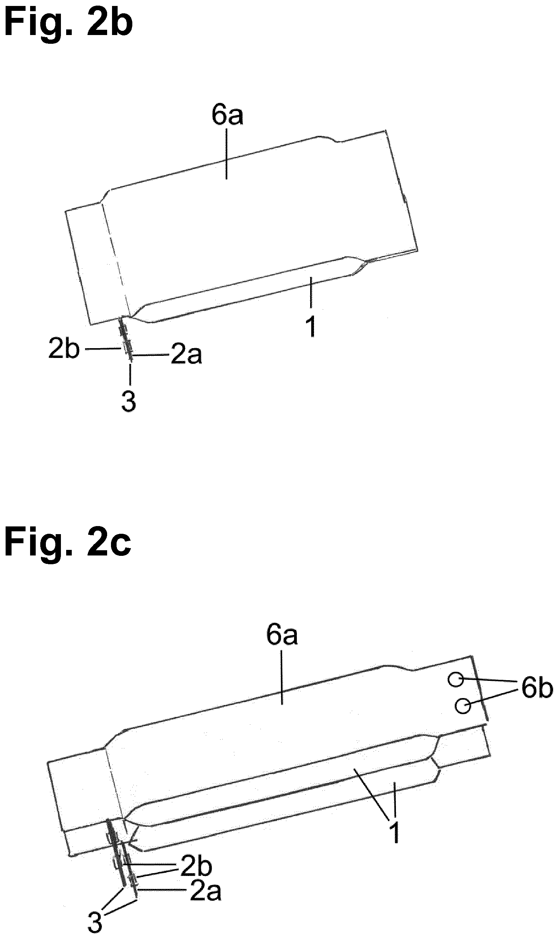

Die Fig. 2b zeigt eine Querschnittsansicht der Fig. 1, bestehend aus einem mit einem beidseitig außen vollflächig mit modifiziertem zugfestem Quellvlies-, Zellkautschuk-Dichtband 6a beschichteten bis 60 cm breiten Flachschlauchabdichtkissen 1 für Fugenbreiten bis etwa 25 cm und Fugenlängen bis über 100 m, das mit einem Reifenventil 3 oder mit einem im Heißsiegelschweißverfahren verschweißten Thermoplast-Einfüllschlauch 2a versehen ist, das/der sich an einer der 1 m bis 30 m langen Längsseiten oder an den 10 bis 60 cm großen Stirn- bzw. Breitseiten des Flachschlauchabdichtkissens 1 befindet und bei längsförmiger Anwendung zur optimalen Druckverteilung dient. Die Ausbildung als Flachschlauchabdichtkissen 1 wird durch Herstellung von druckdichten Verschlüssen in Längsrichtung und an den beiden Enden der Verbundfolien-Oberflächen erzielt. Nach Druckfüllung mit Luft 4 über ein Reifenventil 3 oder den Thermoplast-Einfüllschlauch 2a wird die Druckdichtigkeit des Thermoplast-Einfüllschlauches 2a, wie in der Fig. 3 gezeigt, durch Verpressen des Thermoplast-Einfüllschlauches 2a mit einer Crimphülse 2b mittels einer Crimpzange erzielt.

Die Fig. 2c kann je nach Anwendungsbereich ein oder zwei Flachschlauchabdichtkissen 1 der Fig. 1 oder 2b mit mindestens einem ausgestanzten Zellkautschuk-Dichtbandloch deckungsgleich übereinander verklebt in Rückseiten von Auflagerbänken bis über 20 m eingezogen werden.

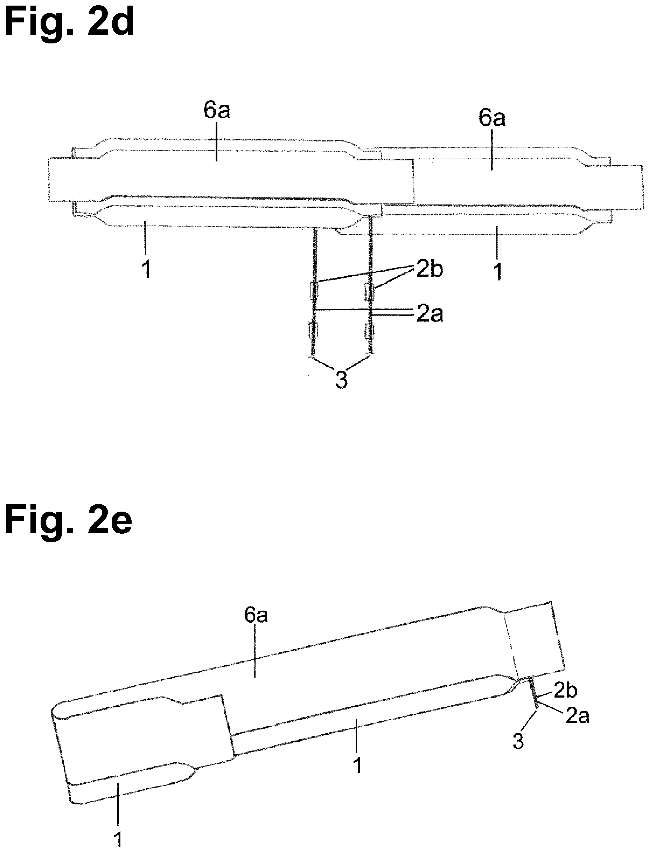

Die Mehrwegabdichtung nach Fig. 2d, kann je nach Anwendungsbereich mit mehreren Flachschlauchabdichtkissenenden der Fig. 1, 2b oder 2c gebildet sein und mindestens 30 cm bis > 100 cm deckungsgleich übereinandergelegt sein, um Ecken oder Bögen oder in senkrechter oder waagrechter Form in Dehn- und/oder Bewegungsfugen eingeschoben, ein Wassergefälle eingestellt und bis über 100 m gegen Wasserfortleitung abgedichtet werden.

Die Fig. 2e kann je nach Anwendungsbereich beim Flachschlauchabdichtkissen der Fig. 2a und 2b für eine druckwasserdichte Abdichtung die Enden mit mindestens zweimal der Lieferbreite um 180° umgebogen, mit Luft befüllt und den/die Endbereich(e) mit dauerelastischer Dichtmasse ausgefüllt werden.

Die Fig. 4 zeigt einen Querschnitt einer der Fig. 2a ähnlichen temporären Mehrweg-Abdichtvorrichtung 1, die vorzugsweise zur kreisförmigen Verwen-dung, zur Kabel- und/oder Rohr-Zwischenraumabdichtung, Montage bei fließendem oder stehenden Wasser mit Wechselwirkung bei Wärme und Wasser, in mit mehreren Kabeln und/oder Rohren 9 belegten Kanälen 8, Rohren 9 und/oder Wanddurchführungen 8, vorgesehen ist. Die temporäre Mehrweg-Abdicht-vorrichtung 1 ist in Kombination quellvlies-zellkautschuk-beschichtet 5 und kann einen Zellkautschuk-Abdichtstern 7a mit einer Quellvlies-Dichtbandstreifen-Umhüllung 7b aufweisen, welcher vorzugsweise mindestens eine Längsnaht 7c aufweisen kann.

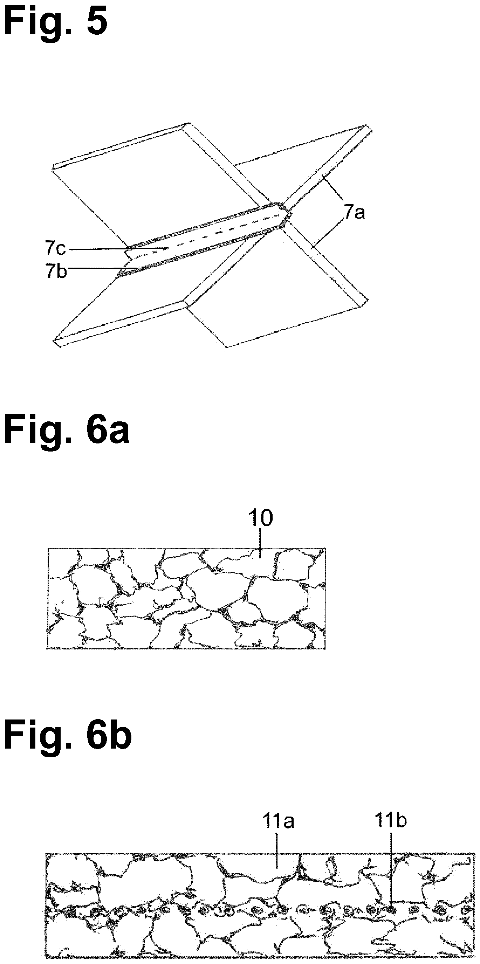

Die Fig. 5 zeigt eine perspektivische Ansicht der in Fig. 4 gezeigten Vierkammer-Zellkautschuk-Abdichtstern-Zwischenraumabdichtung 7a, hergestellt aus mindestens zwei übereinander gelegten 3 mm Zellkautschuk-Dichtbändern 5, die mittig mit einem Quellvlies-Dichtband umwickelt und in Längsrichtung 7c vernäht sind.

Die Fig. 6a und 6b zeigen eine ähnliche Vorrichtung wie in Fig. 2a, 4 und 5 als Zellkautschuk-Dichtband 5, das in Banddicke 3 mm mit/ohne zugfeste Quellvlies-Gewebeeinlage oder in Banddicken ≥ 6 und 11 mm mit/ohne einer zugfesten und temperaturbeständigen Gewebeeinlage 11b in Längsrichtung der Dichtbandmitte und/oder an der Dichtband-Ober-/Unterseite ausgebildet ist. Bei den Zellkautschuk-Dichtbändern 5, 6a und 6b, die um das Flachschlauchabdichtkissen 1 gelegt sind, ist auf mindestens einer Seite doppelseitig selbstklebendes Band angebracht. Als Werkstoff für den Zellkautschuk werden im sogenannten Expansionsverfahren auf der Basis von Natur- und/oder Synthesekautschuk z.B. EPDM und anderen synthetischen Elastomeren hergestellt. Das 3 mm Quellvlies-Zellkautschuk-Dichtband 5 weist vorzugsweise ein Flächengewicht von 400 g/m² auf. Die Materialdicke des mit/ohne Quellvlies-Gewebeeinlage 11b modifizierten zugfesten Zellkautschuk-Dichtbandes 6a kann insbesondere bis zu 11 mm oder mehr sein mit einem Flächengewicht von 1.300 g/m² und kann dazu dienen, zwei übereinandergelegte Flachschlauchabdichtkissen 1 der Fig. 2c über ausgestanzte Zuglöcher 6b mit einer Zugkraft von ≤ 25 kg in Längen bis > 10m in die hintere Auflagerbankkammer einzuziehen oder nach Fig. 2b und 2d in Längen von 23 m bis über 100 m in Dehn- und Bewegungsfugen einzuschieben.

Die abdichtende Funktion des modifizierten Quellvlies-Zellkautschuk-Dichtbandes 5 und 6a kommt sofort bei Druckfüllung des Flachschlauchabdichtkissens 1 ohne und/oder unter Wasser zum Tragen. Ein nachteiliges Verkleben oder Verschieben des Zellkautschuk-Abdichtsterns 7a oder des Flachschlauchabdichtkissens 1 tritt bei dem verwendeten Zellkautschuk nicht auf, weswegen eine schnelle und einfache Demontage und eine wiederholte Montage, insbesondere durch seine hohe Rückprallfestigkeit unmittelbar nach Demontage, ermöglicht ist.

### Bezugszeichenliste

- 1: Flachschlauchabdichtkissen
- 2a: Thermoplast-Einfüllschlauch
- 2b: Crimphülse mit Crimpzange verpresst
- 3: Reifenventil
- 4: Abdichtkissen-Luft-Überdruckfüllung
- 5: Selbstklebendes Zellkautschuk-Dichtband, Dicke 2 bis 3 mm, umlaufende Teilbeschichtung
- 6a: Modifiziertes Quellvlies-Zellkautschuk-Dichtband mit/ohne selbstklebendem zugfestem Gewebe, Dicke 6 bis 11 mm, vollflächige Beschichtung
- 6b: Ausgestanzte Zuglöcher
- 7a: Zellkautschuk-/4-Kammer-Abdichtstern 400 g/m²
- 7b: Umlaufendes Quellvlies-Dichtband 200g/m²
- 7c: Eine Längsnaht
- 8: Mantelrohr, Hohlraum, Kabelschutzrohr, Wanddurchführung
- 9: Kabel, Rohr
- 10: Kombination Quellvlies-Zellkautschuk-Dichtband 2 bis 3 mm oder 6 bis 10 mm
- 11a: Modifiziertes zugfestes Quellvlies-Zellkautschuk-Dichtband
- 11b: Gewebeeinlage

## Patentansprüche

1. Vorrichtung zur temporären Mehrweg-Abdichtung für Montagen bei fließendem oder stehendem Wasser gegen Wassereintritt und Rauchdurchdringung in Zwischenräumen und in Hohlräumen, Kabelschutzrohren oder Wanddurchführungen (8), die mit Kabeln (9) und/oder Rohren (9) belegt sind oder in Dehn- und/oder Bewegungsfugen, Auflagerbänken,
**dadurch gekennzeichnet,**
**dass** die Vorrichtung aus einem in der Länge und Breite festgelegten Flachschlauchabdichtkissen (1) besteht, das als Zwischenraumabdichtung an seinen Außenseiten mit einem Zellkautschuk-Dichtband (5 oder 6a), welches vorzugsweise mit Quellvlies modifiziert ist, ausgerüstet ist, das an einer Breitseite mit einem Reifenventil (3) oder Thermoplast-Einfüllschlauch (2a) verschweißt ist, das mit einem gasförmigem Medium befüllt (4) und überdruckdicht mit einer Crimphülse (2b) in Kombination mit einer Crimpzange mit einer Leckrate von ≤ 2,7 mbarl/Jahr verschlossen ist.

2. Vorrichtung nach Anspruch 1,
**dadurch gekennzeichnet,**
**dass** eine kreisförmige oder längsförmige Anordnung des Flachschlauchabdichtkissens (1) vorgesehen ist, wobei der Thermoplast-Einfüllschlauch (2a) für eine Summenleckrate von ≤ 2,7 mbarl/Jahr im Heißsiegelschweißverfahren mit dem Flachschlauchabdichtkissen (1) verbunden ist,
wobei die Dichtigkeit des Thermoplast-Einfüllschlauchs (2a) durch Verklemmen mittels Crimphülse (2b) in Kombination mit einer Crimpzange bis 3 bar überdruckdicht (4) erzielbar ist.

3. Vorrichtung nach Anspruch 1 oder 2,
**dadurch gekennzeichnet,**
**dass** das Flachschlauchabdichtkissen (1) im Anwendungsbereich als Einzelelement voll- oder halbkreisförmig im Hohlraum-, Kabelschutzrohr- oder Wanddurchführungsumfang (8) oder in Dehn- und/oder Bewegungsfugen und Auflagerbänken angeordnet ist, wobei sich das Reifenventil (3) oder der Thermoplast-Einfüllschlauch (2a) mit zwei Crimphülsen mindestens an einem Ende des Flachschlauchabdichtkissens (1) befindet.

4. Vorrichtung nach den Ansprüchen 1 bis 3,
**dadurch gekennzeichnet,**
**dass** sie außenliegend in Längsrichtung zusätzlich ein elastisches, mit der Umgebung nicht dauerhaft selbstklebendes, unter Betriebsbedingungen bei Montagen bei fließendem oder stehendem Wasser mit der Umgebung nicht dauerhaft selbstklebendes modifiziertes Quellvlies-Zellkautschuk-Dichtband (5, 6a, 10, 11a, 11b) mit einem Flächengewicht von 400 g/m² bis 1.300 g/m² aufweist.

5. Vorrichtung nach einem der Ansprüche 1 und 4,
**dadurch gekennzeichnet,**
**dass** beim Abdichten von mit Kabeln (9) und/oder Rohren (9) durchzogenen Hohlräumen, Kabelschutzrohren oder Wanddurchführungen (8) im Bereich der Berührungsstellen von Kabeln (9) und/oder Rohren (9) eine Umwicklung aus einem kombinierten Quellvlies-Zellkautschuk-Dichtband (5, 10) mit bzw. ohne Klebefolie eingesetzt ist und sich im Innenraum Füllelemente oder Zellkautschuk-Abdichtsterne (7a, 7b, 7c) befinden, die aus Dichtbandmaterial (10) hergestellt sind.

6. Vorrichtung nach Anspruch 5,
**dadurch gekennzeichnet,**
**dass** die Zellkautschuk-Abdichtsterne (7a), zum Einschieben zwischen Kabeln (9) und/oder Rohren (9), aus zwei übereinander gelegten Zellkautschuk-Abdichtbändern (10), umgelegten Quellvlies-Abdichtbändern (7b) mit einer ≥ 5 mm breiten Längsnaht (7c), hergestellt sind.

7. Vorrichtung nach den Ansprüchen 1 und 2,
**dadurch gekennzeichnet,**
**dass** das Flachschlauchabdichtkissen (1) über ein Reifenventil (3) oder über den Thermoplast-Einfüllschlauch (2a) mit einem gasförmigen Medium (Luft) gefüllt ist und der bis 3 bar überdruckdichte Einfüllschlauch (2a) durch Verpressen mittels Crimphülse (2b) in Kombination mit einer Crimpzange hergestellt ist.

8. Vorrichtung nach einem der Ansprüche 1, 2, 3 und 7,
**dadurch gekennzeichnet,**
**dass** das Flachschlauchabdichtkissen (1) aus einem gefalteten Band oder Flachschlauch hergestellt ist, der je nach dem Anwendungsbereich aus Thermoplast, Elastomeren und/oder schwer entflammbaren Thermoplast-Elastomer-Gemischen besteht, wobei diese Stoffe metallische und/oder metallfreie Einlagen aufweisen.

9. Vorrichtung nach einem der Ansprüche 1, 2, 3 und 7,
**dadurch gekennzeichnet,**
**dass** das Band des Flachschlauchabdichtkissens (1) mit metallischer Einlage vorzugsweise mindestens aus einer fünflagigen Thermoplast-Verbundfolie mit dem Aufbau
- 100 bis 250 µm PE
- 10 bis 23 µm PET
- 9 bis 5 µm ALU
- 10 bis 23 µm PET
- 100 bis 250 µm PE
hergestellt ist.

10. Vorrichtung nach einem der Ansprüche 1, 2, 3, 7, 8 und 9,
**dadurch gekennzeichnet,**
**dass** das Flachschlauchabdichtkissen (1) mit metallischer Einlage eine Summenleckrate von 2,7 mbarl/Jahr und das dreilagig aufgebaute, metallfreie Abdichtkissen eine solche von ≤ 200 mbarl/Jahr aufweist.

11. Vorrichtung nach einem der Ansprüche 1, 2, 3, 7, 8 und 10
**dadurch gekennzeichnet,**
**dass** das Flachschlauchabdichtkissen (1) aus einer dreilagigen Thermoplast-Verbundfolie ohne metallische Einlage mit dem Aufbau
- 100 bis 250 µm PE
- 9 bis 23 µm PET oder gleichwertige PBT, PPE, PP, Tyvek < 64,4 g/m² etc.
- 100 bis 250 µm PE
hergestellt ist.

12. Vorrichtung nach einem der Ansprüche 1, 4, 5 und 6,
**dadurch gekennzeichnet,**
**dass** für das Zellkautschuk-Dichtband (10, 11a, 11b, 6a) und den Zellkautschuk-Abdichtstern (7a) aus Werkstoffen sogenannter Natur- und/oder Synthesekautschuk Elastomeren mit einer dem Anwendungsbereich vorgesehenen Schichtdicke von 2 bis > 10 mm mit einem zugfesten Quellvlies-, Textil-, Kunststoff- oder Glasfasergewebe im Zentrum oder an den Rändern, einseitig ohne/mit doppelseitig klebendem Dichtband versehen, hergestellt werden.
